# FASCICULE DE BREVET EUROPEEN

(11) **EP 2 249 327 B1**
(45) Date de publication et mention de la délivrance du brevet: **29.10.2014**
(21) Numéro de dépôt: 09380098.5
(22) Date de dépôt: 08.05.2009
(51) Int. Cl.: G09F 3/02, G09F 3/20, G06K 19/077

(54) **Dispositif d'identification, conteneur pourvu d'un tel dispositif et procédé de montage de l'ensemble**
Identifizierungsvorrichtung, mit einer solchen Vorrichtung ausgestatteter Behälter und Montageverfahren des Ganzen
Identification device, container equipped with such a device and method for assembling the unit

(43) Date de publication de la demande: 10.11.2010
(60) Demande divisionnaire: 13168031.6
(73) Titulaire: Athelia Solutions Iberica S.L., 28290 Las Matas - Madrid (ES); Athelia Solutions, 75007 Paris (FR)
(72) Inventeur: Garcia Contreras, Gonzalo, Madrid (ES); Soria Colmenero, Gloria, Madrid (ES)
(74) Mandataire: Pittis, Olivier

(56) Documents cités:
- EP-A- 0 586 083
- EP-A- 1 011 069
- EP-A- 1 011 070
- FR-A- 2 637 021
- US-A- 5 555 655
- US-A- 5 697 173

## Description

La présente invention concerne un dispositif d'identification, un conteneur pourvu d'un tel dispositif et un procédé de montage de l'ensemble.

L'invention concerne plus particulièrement un dispositif d'identification pour conteneur de fluide, notamment pour conteneur de gaz, comprenant un organe électronique d'identification à distance tel qu'une antenne à radio-identification (RFID), l'organe électronique d'identification étant disposé dans ou sur un support, ledit support étant destiné à être fixé mécaniquement sur un conteneur de fluide.

Il est connu de fixer des dispositifs d'identification électronique interrogeables à distance sur des cylindres ou des bouteilles de fluides.

Ces dispositifs électroniques d'identification à distance utilisent généralement la technologie de radio-identification plus souvent désignée par le sigle « RFID » (de l'anglais Radio Frequency IDentification).

Cette technologie permet de mémoriser et de récupérer des données à distance en utilisant des marqueurs appelés « radio-étiquettes » (« RFID tag » ou « RFID transponder » ou « tag » en anglais).

Ces radio-étiquettes sont de petits objets qui comprennent généralement une antenne associée à une puce électronique et éventuellement une pile pour recevoir et/ou répondre aux requêtes radio émises depuis un émetteur-récepteur.

Ces radios-étiquettes sont généralement fixées sur un boîtier ou un substrat. Les radios-étiquettes sont par exemple encapsulées dans le boîtier via, par exemple, une résine.

Cette technologie est notamment utilisée pour la gestion d'un stock de conteneurs ou bouteilles (GPL, fluide alimentaire...) notamment lors de leur conditionnement. Pour fixer le dispositif d'identification sur un conteneur il est généralement prévu de coller ou de riveter le boîtier sur un chapeau de protection du robinet du conteneur. Selon d'autres solutions, le dispositif d'identification est fixé directement sur le corps du conteneur.

Le document EP1011070A1 décrit un transpondeur d'identification pour bouteille de gaz comprenant un anneau support contenant une antenne annulaire. Le transpondeur est fixé sur la bouteille au moyen d'un collier rigide de l'anneau support qui est engagé dans une rainure circulaire formée en dessous d'un filetage d'un collier fileté fixé sur le col de la bouteille.

Le document EP1011069A2 décrit un support électronique de données pour bouteilles de gaz sous pression comprenant un anneau de maintien en matière plastique dans lequel est disposée une antenne. L'anneau de maintien est monté sur un anneau de montage fileté destiné à être monté sur une bouteille.

Le document US5697173 décrit un collier d'identification comprenant un anneau de support d'une boucle conductrice. L'anneau de support est monté sur un col fileté d'une bouteille de gaz au moyen d'un collier de blocage distinct. Le collier de blocage comprend, sur sa bordure interne, des pattes flexibles formant un système de blocage axial de l'anneau support en coopérant avec les filets du filetage de la bouteille.

Le document US5555655 décrit une bouteille de gaz munie d'un collier d'identification portant des codes barre d'identification. Le collier d'identification comprend, sur sa bordure interne, des doigts flexibles, formant un système de blocage axial de l'anneau support en coopérant avec les filets d'un filetage du col de la bouteille. Le collier d'identification est monté entre un collier de protection vissé sur le filetage du col de la bouteille et la base taraudée d'un chapeau de protection vissé également sur le col fileté de la bouteille. Le collier d'identification est serré entre le chapeau et le collier de protection.

Le document EP586083A2 décrit un transpondeur magnétique pour bouteille de gaz sous pression comprenant une antenne montée dans un support annulaire. Le support d'antenne est disposé sur l'extrémité du col de la bouteille et un robinet est fixé dans le col. Le support annulaire du transpondeur est libre entre le col de la bouteille et la base du robinet. Si besoin, le support annulaire du transpondeur peut être fixé à la bouteille.

Le document FR2637021A1 décrit un régulateur de pression du carburant d'un moteur à injection monté dans un logement au moyen d'une épingle qui s'engage dans des ouvertures du logement et forme des butées de blocage d'une collerette formée sur le corps du régulateur de pression.

Cependant, ces modes de fixations sont relativement coûteux et complexes à échelle industrielle. De plus, du fait de la variété des conteneurs (forme, structure et matériaux), la fixation et le positionnement des dispositifs d'identification peut conduire à des problèmes de bonne lecture des informations. En effet, des conteneurs adjacents sur des chaînes de convoyage peuvent créer des interférences entre les dispositifs d'identification adjacents.

Un but de la présente invention est de pallier tout ou partie des inconvénients de l'art antérieur relevés ci-dessus.

A cette fin, le dispositif d'identification selon l'invention est défini par la revendication 9.

Par ailleurs, des modes de réalisation de l'invention peuvent comporter l'une ou plusieurs des caractéristiques suivantes :
- la surface d'attache réduit au moins localement les dimensions de l'ouverture centrale délimitée par le boîtier annulaire d'une valeur comprise entre 1 et 6 cm et de préférence de 2 à 4 cm,
- la surface d'attache forme un rebord continu ou discret à l'intérieur de l'ouverture centrale dudit boîtier annulaire,
- la surface d'attache est monobloc avec le boîtier annulaire,
- la surface d'attache comporte des parties ou pattes flexible pour permettre d'enfiler le boîtier annulaire sur une valve ou un robinet ayant des dimensions transverses supérieure ou égales à l'ouverture centrale délimitée par la surface d'attache par déformation élastique de la surface d'attache,
- la surface d'attache a une épaisseur comprise entre 0,5mm et 10mm et de préférence entre 1 et 4mm, ladite épaisseur de la surface d'attache étant inférieure à l'épaisseur du boîtier annulaire,
- la surface d'attache comprend des organes de fixation amovibles coopérant sélectivement avec le boîtier annulaire pour réaliser une solidarisation ou une désolidarisation sélective de la surface d'attache par rapport au boîtier annulaire,
- la surface d'attache comprend une broche, le boîtier annulaire comportant sur sa périphérie un ou des orifices destinés à accueillir sélectivement l'une ou les extrémités de la broche formant la surface d'attache, la broche traversant le corps du boîtier pour s'étendre dans l'ouverture centrale de ce dernier,
- la broche comporte un ou des bras espacés formant chacun une surface d'attache.

L'invention concerne également un conteneur selon la revendication 1.

L'invention concerne également un procédé de montage selon la revendication 8.

L'invention concerne également un procédé de montage selon la revendication 11.

L'invention concerne également un procédé de montage selon la revendication 12.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de dessus et schématique d'un premier exemple de réalisation possible d'un dispositif d'identification selon l'invention,
- la figure 2 illustre une demi-section transversale selon la ligne AA du dispositif d'identification de la figure 1,
- la figure 3 représente une vue de dessus et schématique d'un second exemple de réalisation possible d'un dispositif d'identification selon l'invention,
- la figure 4 illustre une demi-section transversale selon la ligne BB du dispositif d'identification de la figure 3,
- la figure 5 illustre une demi-section transversale d'un troisième exemple possible de réalisation du dispositif d'identification selon l'invention,
- la figure 6 représente une vue de dessus et schématique d'un quatrième exemple de réalisation possible d'un dispositif d'identification selon l'invention en position montée sur un robinet,
- la figure 7 illustre une vue en perspective du dispositif de la figure 6 en position partiellement montée sur le robinet,
- la figure 8 illustre une vue en perspective, schématique et partielle, d'un exemple de montage d'un dispositif d'identification selon l'invention sur un robinet équipé d'un robinet ou d'une valve,
- la figure 9 illustre une vue en coupe verticale de l'ensemble de la figure 8,
- la figure 10 illustre une vue de dessous d'un exemple possible de réalisation du boîtier 2 de la figure 3,
- la figure 11 illustre une demi-section transversale d'un quatrième exemple possible de réalisation du dispositif d'identification selon l'invention.

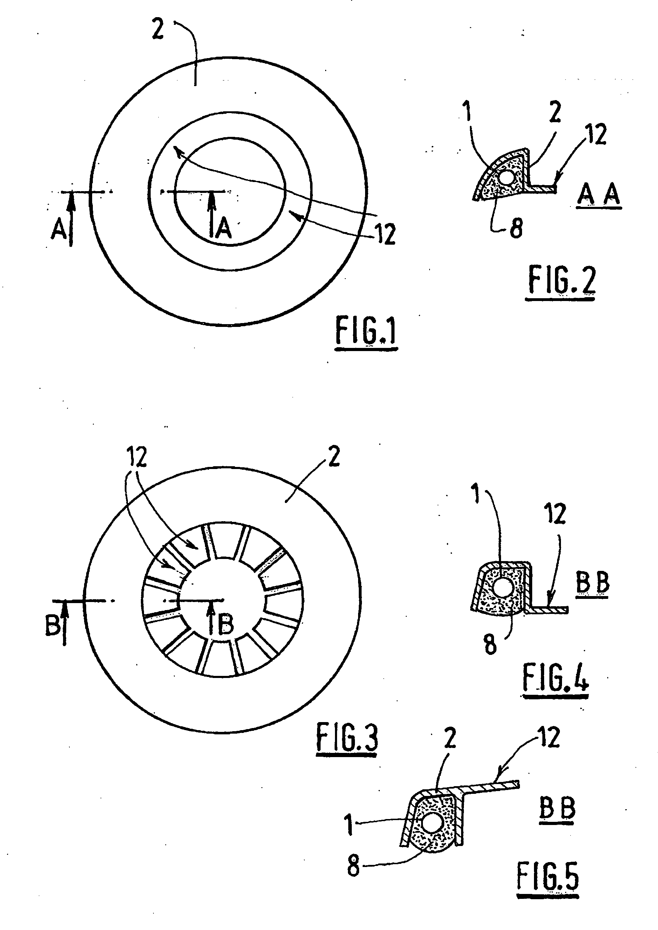

En se référant aux figures 1 et 2, le dispositif d'identification, notamment pour conteneur de fluide, comprend un support 2 formant un boîtier annulaire circulaire. Le boîtier est par exemple en matériau plastique. Un organe électronique d'identification 1 est disposé à l'intérieur du boîtier 2 annulaire. L'organe électronique d'identification 1 peut comprendre notamment une antenne circulaire. L'organe électronique d'identification 1 est par exemple maintenu dans le boîtier via une résine 8 ou tout autre élément approprié connu en soi. (Le boîtier 2 peut être ouvert dans sa partie inférieure). L'antenne 1 peut être notamment une antenne en forme d'anneau plat (0,5mm d'épaisseur) ou une antenne en forme de capsule ou tout autre dispositif électronique approprié.

De préférence, le boîtier 2 annulaire a un diamètre compris entre 3 et 15 cm, par exemple entre 3 et 8 cm.

Dans sa partie centrale (à l'intérieur de l'anneau formé par le boîtier 2), le boîtier annulaire 2 comporte une surface d'attache 12 s'étendant radialement vers l'intérieur dudit boîtier annulaire 2. Dans l'exemple des figures 1 et 2, la surface 12 d'attache est un rebord circulaire solidaire (monobloc) avec le boîtier 2. La surface d'attache 2 a par exemple un diamètre compris entre 3 et 6 cm. La surface d'attache a par exemple une épaisseur comprise entre 0,5mm et 10mm et de préférence entre 1 et 4mm. De préférence l'épaisseur de la surface 12 d'attache est inférieure à l'épaisseur du boîtier annulaire 2.

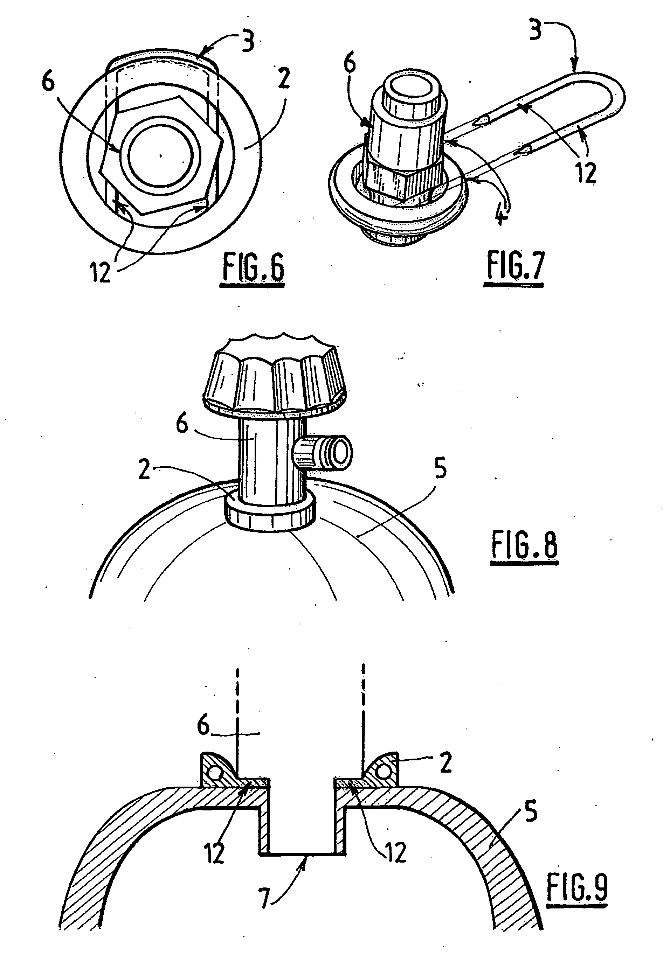

De cette façon, en position montée sur un conteneur (figures 8 et 9), le boîtier annulaire 2 est disposé autour de l'orifice 7 du conteneur 5 et autour du robinet 5 (ou de la valve) fixé dans l'orifice 7. La surface 12 d'attache assure le maintien mécanique du dispositif d'identification sur le conteneur 5 en étant située ou prise en sandwich entre le corps d'un conteneur 5 et le corps du robinet 6 fixé sur le conteneur.

Ceci permet de fixer un dispositif d'identification standard sur des conteneurs différents. Le dispositif d'identification peut notamment être placé sur le conteneur 5 (autour de l'orifice 7) avant la fixation du robinet 6 ou de la valve dans l'orifice 7. De préférence, lorsque le robinet 6 est ensuite fixé, le dispositif d'identification ne peut être retiré indépendamment du robinet 6 sans endommager ledit dispositif d'identification.

Le montage peut être manuel et/ou automatique.

Comme représenté aux figures 3 et 4, la surface d'attache 2 peut comprendre des parties discrètes, c'est-à-dire une pluralité de portions indépendantes ou distinctes.

De plus, tout ou partie de la surface 12 d'attache (pattes 12, figure 4) peut être flexible pour permettre d'enfiler le boîtier annulaire 2 sur une valve ou un robinet 6 ayant des dimensions transverses supérieure ou égales à l'ouverture centrale délimitée par la surface d'attache 12.

De cette façon, le dispositif d'identification peut, comme décrit précédemment, être placé sur le conteneur (autour de l'orifice 7) avant la fixation du robinet 6.

Cependant, en cas de surface 12 d'attache flexible, le dispositif d'identification peut également être placé sur le conteneur 5 (autour de l'orifice 7) après la fixation du robinet 6. La configuration de surface 12 d'attache permet le montage sur le robinet 6 par déformation élastique mais rend difficile ou empêche l'opération inverse (retrait vers le haut) du dispositif d'identification. Par exemple, la surface 12 d'attache peut avoir une orientation (inclinaison vers le haut par exemple) et une rigidité favorisant uniquement sa déformation dans le sens du montage sur un robinet 6.

Comme représenté aux figures 2 et 4, la surface 12 d'attache peut être située dans un plan parallèle au plan du boîtier annulaire 2. Plus précisément, la surface 12 d'attache peut être située au niveau de l'extrémité inférieure du boîtier annulaire 2 (cf. figures 2 et 4, la position supérieure faisant référence à sa position verticale et montée sur un conteneur).

Bien entendu, et comme représenté à la figure 5, la surface 12 d'attache peut être située au niveau de l'extrémité supérieure du boîtier 2 annulaire.

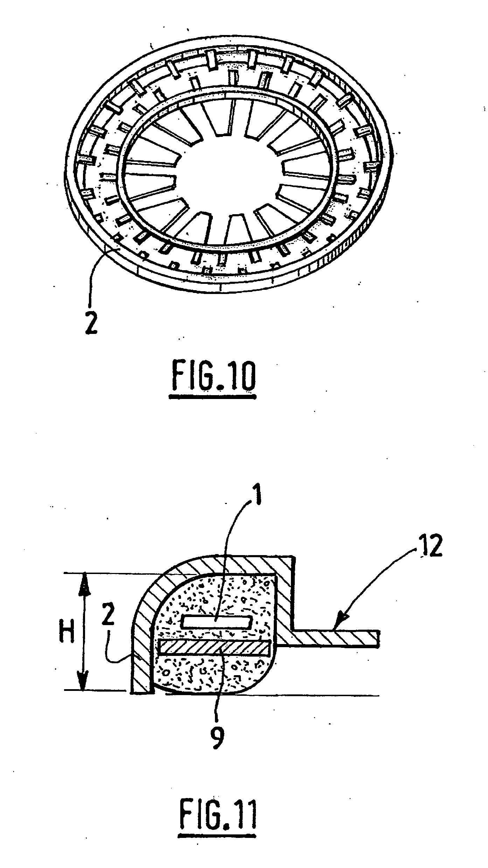

De même, la surface d'attache 12 peut être située à n'importe quel niveau du boîtier 2 (par exemple à mi-hauteur comme visible sur la figure 11). La hauteur H (profondeur verticale) du boîtier 2 est adaptée en fonction du matériau du conteneur de destination. Cette hauteur H est par exemple comprise entre 2mm et 20mm et de préférence entre 5 mm et 10mm, notamment pour des conteneurs métallique.

Dans le mode de réalisation illustré aux figures 6 et 7, la surface 12 d'attache peut être sélectivement solidarisée ou désolidarisé par rapport au boîtier 2 annulaire.

Par exemple, le boîtier 2 et la surface 12 d'attache comprennent des organes de fixation amovibles conjugués permettant une solidarisation ou une désolidarisation sélective de la surface d'attache 12 par rapport au boîtier annulaire 2.

Par exemple, la surface 12 d'attache comprend une broche 3 en U et le boîtier 2 annulaire comporte un ou des orifices 4 destinés à accueillir sélectivement l'une ou les extrémités de la broche 3. En position montée, la broche 3 traverse le corps du boîtier 2 pour s'étendre dans l'ouverture centrale du boîtier annulaire 2. De cette façon, les deux bras parallèle de la broche en U forment chacun une surface 12 d'attache amovible.

Le fait de prévoir une surface 12 d'attache amovible comme dans l'exemple des figures 6 et 7, permet un montage dans lequel le boîtier 2 annulaire est disposé autour de l'orifice 7 du conteneur en enfilant et passant le boîtier annulaire 2 le long de la valve ou du robinet 6 déjà monté sur le conteneur 5. La surface 12 d'attache peut ensuite être fixée sur le boîtier annulaire 2 pour se positionner entre le corps du conteneur 5 et le corps du robinet 6 de façon à bloquer en position le dispositif d'identification. Par exemple, la fixation de la surface 12 d'attache sur le boîtier annulaire 2 est réalisée par encliquetage.

Bien entendu, d'autres particularités sont possibles.

L'organe électronique d'identification à distance peut être prévu pour fonctionner à toute fréquence envisageable (depuis les basses fréquences jusqu'aux micro-ondes).

Comme illustré par exemple à la figure 10, la surface interne du boîtier 2 peut comporter des nervures (par exemple horizontales et/ou verticales) pour améliorer la cohésion avec la résine 8 qui viendra remplir le volume creux et noyer les composants électroniques.

On comprend donc aisément que tout en étant de structure simple et peu coûteuse, l'invention permet de fixer efficacement et avec une grande sécurité d'utilisation un dispositif d'identification sur des conteneurs très différents structurellement.

L'invention permet d'améliorer la fixation du dispositif d'identification sur un conteneur. De plus, les performances de lecture du champ magnétique du dispositif d'identification sont améliorées.

En effet, le positionnement du dispositif d'identification sur le conteneur selon l'invention permet de mieux assurer le couplage magnétique entre le dispositif d'identification et le corps conteneur (positionnement maîtrisé grâce au boîtier notamment). De cette façon, la fréquence du dispositif d'identification (antenne) est choisie (« detuned ») de façon à tenir compte de l'impact magnétique du conteneur sur lequel le dispositif est fixé.

Pour isoler magnétiquement le dispositif d'identification du corps du conteneur, et améliorer les performances de lecture magnétique du dispositif, il est possible de prévoir une couche 9 de matériau isolant tel qu'une ferrite disposée entre l'organe électronique d'identification (antenne 1) et le corps du conteneur.

## Revendications

1. Conteneur (5), notamment de fluide sous pression, comportant un orifice (7) de remplissage et/ou de soutirage et un robinet (6) disposé dans l'orifice (7), comportant un dispositif d'identification disposé autour du robinet et autour de l'orifice (7), ledit dispositif d'identification comprenant un organe électronique d'identification (1) à distance tel qu'une antenne à radio-identification (RFID), l'organe électronique d'identification (1) étant disposé dans ou sur un support (2), ledit support (2) étant fixé mécaniquement sur le conteneur de fluide, le support comportant un boîtier annulaire ayant un diamètre compris entre 3 et 15 cm pour permettre sa disposition autour d'un orifice d'un conteneur, le boîtier annulaire (2) comportant au moins une surface (12) d'attache s'étendant vers l'ouverture centrale dudit boîtier annulaire (2), en position montée, le boîtier annulaire (2) étant situé autour du robinet avec la surface (12) d'attache située entre le corps d'un conteneur et le corps dudit robinet fixé sur le conteneur, ledit dispositif d'identification étant maintenu en position par butée d'au moins une partie de sa surface (12) d'attache entre le corps du robinet (6) et le corps du conteneur (5), **caractérisé en ce que** le dispositif d'identification est maintenu en position par serrage d'au moins une partie de sa surface (12) d'attache entre le corps du robinet (6) et le corps du conteneur (5).

2. Conteneur selon la revendication 1, **caractérisé en ce que** la surface (12) d'attache réduit au moins localement les dimensions de l'ouverture centrale délimitée par le boîtier annulaire (2) d'une valeur comprise entre 1 et 6 cm et de préférence de 2 à 4 cm.

3. Conteneur selon la revendication 1 ou 2, **caractérisé en ce que** la surface (12) d'attache forme un rebord continu ou discret à l'intérieur de l'ouverture centrale dudit boîtier annulaire (2).

4. Conteneur selon l'une quelconque des revendications 1 à 3, **caractérisé en ce que** la surface (12) d'attache est monobloc avec le boîtier annulaire (2).

5. Conteneur selon l'une quelconque des revendications 1 ou 4, **caractérisé en ce que** la surface (12) d'attache comporte des parties ou pattes flexible pour permettre d'enfiler le boîtier annulaire (2) sur une valve ou un robinet (6) ayant des dimensions transverses supérieure ou égales à l'ouverture centrale délimitée par la surface d'attache (12), par déformation élastique de la surface (12) d'attache.

6. Conteneur selon l'une quelconque des revendications 1 à 5, **caractérisé en ce que** la surface (12) d'attache a une épaisseur comprise entre 0,5mm et 10mm et de préférence entre 1 et 4mm, ladite épaisseur de la surface (12) d'attache étant inférieure à l'épaisseur du boîtier annulaire (2).

7. Conteneur selon l'une quelconque des revendications 1 à 6, **caractérisé en ce qu'**une couche (9) de matériau isolant tel qu'une ferrite est disposée entre l'organe électronique d'identification (1) et le corps du conteneur.

8. Procédé de montage d'un dispositif d'identification sur un conteneur (5) conforme à l'une quelconque des revendications 1 à 7, **caractérisé en ce qu'**il comporte une première étape de pose du dispositif d'identification autour de l'orifice (7) du conteneur, une seconde étape de montage d'une valve ou d'un robinet (6) dans l'orifice (7) du conteneur, la valve ou le robinet (6) étant monté dans l'orifice (7) du conteneur au travers de l'ouverture centrale du dispositif d'identification de façon à bloquer en position la surface d'attache (12) entre le corps du conteneur (5) et le corps du robinet (6), la surface d'attache (12) étant prise en sandwich et serrée entre le corps du conteneur (5) et le corps du robinet (6).

9. Dispositif d'identification comprenant un organe électronique d'identification (1) à distance tel qu'une antenne à radio-identification (RFID), l'organe électronique d'identification (1) étant disposé dans ou sur un support (2), ledit support (2) étant destiné à être fixé mécaniquement sur un conteneur de fluide, le support comportant un boîtier annulaire ayant un diamètre compris entre 3 et 15 cm pour permettre sa disposition autour d'un orifice d'un conteneur, le boîtier annulaire (2) comportant au moins une surface (12) d'attache s'étendant vers l'ouverture centrale dudit boîtier annulaire (2), en position montée, le boîtier annulaire (2) étant destiné à être situé autour du robinet avec la surface (12) d'attache située entre le corps d'un conteneur et le corps dudit robinet fixé sur le conteneur, la surface (12) d'attache comprenant des organes de fixation amovibles coopérant sélectivement avec le boîtier annulaire (2) pour réaliser une solidarisation ou une désolidarisation sélective de la surface (12) d'attache par rapport au boîtier annulaire (2), **caractérisé en ce que** la surface (12) d'attache comprend une broche (3) et **en ce que** le boîtier (2) annulaire comporte sur sa périphérie un ou des orifices (4) destinés à accueillir sélectivement l'une ou les extrémités de la broche formant la surface (12) d'attache, la broche (3) traversant le corps du boîtier (2) pour s'étendre dans l'ouverture centrale de ce dernier.

10. Dispositif d'identification selon la revendication 9, **caractérisé en ce que** la broche (3) comporte un ou des bras espacés formant chacun une surface (12) d'attache.

11. Procédé de montage d'un dispositif d'identification conforme à la revendication 9 à 10 sur un conteneur (5), notamment de fluide sous pression, comportant un orifice (7) de remplissage et/ou de soutirage et un robinet (6) fixé dans l'orifice du conteneur, **caractérisé en ce qu'**il comporte une première étape de montage d'un robinet dans l'orifice (7) du conteneur, une seconde étape de pose du dispositif d'identification autour de l'orifice (7) du conteneur en enfilant et passant le boîtier annulaire (2) le long du robinet (6) déjà monté sur le conteneur (5), une troisième étape de fixation de la surface (12) d'attache sur le boîtier annulaire (2) pour positionner et bloquer en position la surface d'attache (12) entre le corps du conteneur (5) et le corps du robinet (6).

12. Procédé de montage d'un dispositif d'identification sur un conteneur (5), conforme à la revendication 5, **caractérisé en ce qu'**il comporte une première étape de montage du robinet dans l'orifice (7) du conteneur, une seconde étape de pose du dispositif d'identification autour de l'orifice (7) du conteneur en enfilant et passant le boîtier annulaire (2) le long du robinet (6) déjà monté par déformation élastique des parties ou pattes flexibles de la surface d'attache (12), pour positionner et bloquer en position la surface d'attache (12) entre le corps du conteneur (5) et le corps du robinet (6).

## Patentansprüche

1. Behälter (5), insbesondere für unter Druck stehendes Fluid, mit einer Öffnung (7) zum Befüllen und/oder zum Entnehmen und einem Hahn (6), der in der Öffnung (7) angeordnet ist, aufweisend eine Identifizierungsvorrichtung, die um den Hahn herum und um die Öffnung (7) herum angeordnet ist, wobei die Identifizierungsvorrichtung ein elektronisches Organ zur Identifizierung (1) aus der Ferne wie eine Antenne mit Funkidentifizierung (RFID) umfasst, wobei das elektronische Identifizierungsorgan (1) in oder an einem Träger (2) angeordnet ist, wobei der Träger (2) an dem Fluidbehälter mechanisch befestigt ist, wobei der Träger ein ringförmiges Gehäuse mit einem Durchmesser zwischen 3 und 15 cm aufweist, um ihm seine Anordnung um eine Öffnung eines Behälters herum zu ermöglichen, wobei das ringförmige Gehäuse (2) mindestens eine Befestigungsfläche (12) aufweist, die sich in montierter Position zu der mittleren Öffnung des ringförmigen Gehäuses (2) hin erstreckt, wobei sich das ringförmige Gehäuse (2) um den Hahn herum befindet, wobei sich die Befestigungsfläche (12) zwischen dem Körper eines Behälters und dem Körper des Hahns, der an dem Behälter befestigt ist, befindet, wobei die Identifizierungsvorrichtung durch Anschlag mindestens eines Teils ihrer Befestigungsfläche (12) in Position zwischen dem Körper des Hahns (6) und dem Körper des Behälters (5) gehalten wird, **dadurch gekennzeichnet, dass** die Identifizierungsvorrichtung durch Einklemmen mindestens eines Teils ihrer Befestigungsfläche (12) zwischen dem Körper des Hahns (6) und dem Körper des Behälters (5) in Position gehalten wird,

2. Behälter nach Anspruch 1, **dadurch gekennzeichnet, dass** die Befestigungsfläche (12) die Abmessungen der mittleren Öffnung, die durch das ringförmige Gehäuse (2) begrenzt wird, mindestens lokal um einen Wert verringert, der zwischen 1 und 6 cm und bevorzugt von 2 bis 4 cm beträgt.

3. Behälter nach Anspruch 1 oder 2, **dadurch gekennzeichnet, dass** die Befestigungsfläche (12) einen durchgehenden oder im Inneren der mittleren Öffnung des ringförmigen Gehäuses (2) versteckten Bund bildet.

4. Behälter nach einem der Ansprüche 1 bis 3, **dadurch gekennzeichnet, dass** die Befestigungsfläche (12) einstückig mit dem ringförmigen Gehäuse (2) ausgebildet ist.

5. Behälter nach einem der Ansprüche 1 oder 4, **dadurch gekennzeichnet, dass** die Befestigungsfläche (12) flexible Teile oder Laschen aufweist, um das Aufstecken des ringförmigen Gehäuses (2) auf einem Ventil oder einem Hahn (6) zu ermöglichen, der Querabmessungen hat, die größer oder gleich der mittleren Öffnung sind, die durch die Befestigungsfläche (12) begrenzt wird, wobei das Aufstecken durch elastische Verformung der Befestigungsfläche (12) erfolgt.

6. Behälter nach einem der Ansprüche 1 bis 5, **dadurch gekennzeichnet, dass** die Befestigungsfläche (12) eine Dicke hat, die zwischen 0,5 mm und 10 mm und bevorzugt zwischen 1 und 4 mm beträgt, wobei die Dicke der Befestigungsfläche (12) kleiner als die Dicke des ringförmigen Gehäuses (2) ist.

7. Behälter nach einem der Ansprüche 1 bis 6, **dadurch gekennzeichnet, dass** eine Schicht (9) aus Isoliermaterial, beispielsweise ein Ferrit, zwischen dem elektronischen Identifizierungsorgan (1) und dem Körper des Behälters angeordnet ist.

8. Verfahren zur Montage einer Identifizierungsvorrichtung an einem Behälter (5) nach einem der Ansprüche 1 bis 7, **dadurch gekennzeichnet, dass** es Folgendes aufweist: einen ersten Schritt des Anordnens der Identifizierungsvorrichtung um die Öffnung (7) des Behälters herum, einen zweiten Schritt des Montierens eines Ventils oder eines Hahns (6) in der Öffnung (7) des Behälters, wobei das Ventil oder der Hahn (6) in der Öffnung (7) des Behälters durch die mittlere Öffnung der Identifizierungsvorrichtung hindurch montiert wird, derart, dass es bzw. er die Befestigungsfläche (12) in Position zwischen dem Körper des Behälters (5) und dem Körper des Hahns (6) blockiert, wobei die Befestigungsfläche (12) zwischen dem Körper des Behälters (5) und dem Körper des Hahns (6) sandwichartig in Eingriff genommen und eingeklemmt wird.

9. Identifizierungsvorrichtung, umfassend ein elektronisches Organ zur Identifizierung (1) aus der Ferne wie eine Antenne mit Funkidentifizierung (RFID), wobei das elektronische Identifizierungsorgan (1) in oder an einem Träger (2) angeordnet ist, wobei der Träger (2) dazu bestimmt ist, an einem Fluidbehälter mechanisch befestigt zu werden, wobei der Träger ein ringförmiges Gehäuse mit einem Durchmesser zwischen 3 und 15 cm aufweist, um ihm seine Anordnung um eine Öffnung eines Behälters herum zu ermöglichen, wobei das ringförmige Gehäuse (2) mindestens eine Befestigungsfläche (12) aufweist, die sich, in montierter Position, zu der mittleren Öffnung des ringförmigen Gehäuses (2) hin erstreckt, wobei das ringförmige Gehäuse (2) dazu bestimmt ist, sich um den Hahn herum zu befinden, wobei sich die Befestigungsfläche (12) zwischen dem Körper eines Behälters und dem Körper des Hahns, der an dem Behälter befestigt ist, befindet, wobei die Befestigungsfläche (12) entfernbare Befestigungsorgane umfasst, die selektiv mit dem ringförmigen Gehäuse (2) zusammenwirken, um ein selektives Befestigen oder ein selektives Lösen der Befestigungsfläche (12) relativ zu dem ringförmigen Gehäuse (2) zu realisieren, **dadurch gekennzeichnet, dass** die Befestigungsfläche (12) einen Stift (3) umfasst und dass das ringförmige Gehäuse (2) an seinem Umfang eine oder mehrere Öffnungen (4) aufweist, die dazu bestimmt sind, selektiv ein oder die Enden des Stifts, der die Befestigungsfläche (12) bildet, aufzunehmen, wobei der Stift (3) den Körper des Gehäuses (2) durchquert, um sich in der mittleren Öffnung dieses Letzten zu erstrecken.

10. Identifizierungsvorrichtung nach Anspruch 9, **dadurch gekennzeichnet, dass** der Stift (3) einen oder mehrere beabstandete Arme umfasst, die jeweils eine Befestigungsfläche (12) bilden.

11. Verfahren zur Montage einer Identifizierungsvorrichtung nach Anspruch 9 bis 10 an einem Behälter (5), insbesondere für unter Druck stehendes Fluid, mit einer Öffnung (7) zum Befüllen und/oder zum Entnehmen und einem Hahn (6), der in der Öffnung des Behälters befestigt ist, **dadurch gekennzeichnet, dass** es Folgendes aufweist: einen ersten Schritt des Montierens eines Hahns in der Öffnung (7) des Behälters, einen zweiten Schritt des Anordnens der Identifizierungsvorrichtung um die Öffnung (7) des Behälters herum, indem das ringförmige Gehäuse (2) aufgesteckt und entlang des bereits an dem Behälter (5) montierten Hahns (6) geführt wird, einen dritten Schritt des Befestigens der Befestigungsfläche (12) an dem ringförmigen Gehäuse (2), um die Befestigungsfläche (12) in Position zwischen dem Körper des Behälters (5) und dem Körper des Hahns (6) zu positionieren und zu blockieren.

12. Verfahren zur Montage einer Identifizierungsvorrichtung nach Anspruch 5 an einem Behälter (5), **dadurch gekennzeichnet, dass** sie Folgendes aufweist: einen ersten Schritt des Montierens des Hahns in der Öffnung (7) des Behälters, einen zweiten Schritt des Anordnens der Identifizierungsvorrichtung um die Öffnung (7) des Behälters herum, indem das ringförmige Gehäuse (2) aufgesteckt und entlang des bereits durch elastische Verformung der flexiblen Teile oder Laschen der Befestigungsfläche (12) montierten Hahns (6) geführt wird, um die Befestigungsfläche (12) in Position zwischen dem Körper des Behälters (5) und dem Körper des Hahns (6) zu positionieren und zu blockieren.

## Claims

1. Container (5), in particular for pressurised fluid, comprising a fill and/or discharge aperture (7) and a cock (6) arranged in the aperture (7), comprising an identification device arranged around the cock and around the aperture (7), said identification device comprising an electronic remote identification member (1) such as a radio-frequency identification (RFID) antenna, the electronic identification member (1) being arranged in or on a support (2), said support (2) being mechanically fastened to the fluid container, the support comprising an annular housing having a diameter of between 3 and 15 cm in order to allow it to be arranged around an aperture of a container, the annular housing (2) having at least one attachment surface (12) which extends, in the assembled position, towards the central opening of said annular housing (2), the annular housing (2) being located around the cock with the attachment surface (12) located between the body of a container and the body of said cock which is fastened to the container, said identification device being held in position by the abutment of at least part of its attachment surface (12) between the body of the cock (6) and the body of the container (5), **characterised in that** the identification device is held in position by the clamping of at least part of its attachment surface (12) between the body of the cock (6) and the body of the container (5).

2. Container according to claim 1, **characterised in that** the attachment surface (12) reduces, at least locally, the dimensions of the central opening delimited by the annular housing (2) by a value of between 1 and 6 cm and preferably of from 2 to 4 cm.

3. Container according to either claim 1 or claim 2, **characterised in that** the attachment surface (12) forms a continuous or discrete rim inside the central opening of said annular housing (2).

4. Container according to any of claims 1 to 3, **characterised in that** the attachment surface (12) is integral with the annular housing (2).

5. Container according to either claim 1 or claim 4, **characterised in that** the attachment surface (12) comprises flexible portions or tabs in order to allow the annular housing (2) to be fitted onto a valve or a cock (6) having transverse dimensions which are larger than or equal to the central opening delimited by the attachment surface (12), by elastic deformation of the attachment surface (12).

6. Container according to any of claims 1 to 5, **characterised in that** the attachment surface (12) has a thickness of between 0.5 mm and 10 mm, and preferably between 1 and 4 mm, said thickness of the attachment surface (12) being less than the thickness of the annular housing (2).

7. Container according to any of claims 1 to 6, **characterised in that** a layer (9) of insulating material such as a ferrite is arranged between the electronic identification member (1) and the body of the container.

8. Method for installing an identification device on a container (5) according to any of claims 1 to 7, **characterised in that** it includes a first step of placing the identification device around the aperture (7) of the container, a second step of installing a valve or a cock (6) in the aperture (7) of the container, the valve or the cock (6) being installed in the aperture (7) of the container through the central opening of the identification device in such a way as to lock the attachment surface (12) in position between the body of the container (5) and the body of the cock (6), the attachment surface (12) being sandwiched and clamped between the body of the container (5) and the body of the cock (6).

9. Identification device comprising an electronic remote identification member (1) such as a radio-frequency identification (RFID) antenna, the electronic identification member (1) being arranged in or on a support (2), said support (2) being intended to be mechanically fastened to a fluid container, the support comprising an annular housing having a diameter of between 3 and 15 cm in order to allow it to be arranged around an aperture of a container, the annular housing (2) having at least one attachment surface (12) which extends, in the assembled position, towards the central opening of said annular housing (2), the annular housing (2) being intended to be located around the cock with the attachment surface (12) located between the body of a container and the body of said cock which is fastened to the container, the attachment surface (12) comprising removable fasteners which cooperate selectively with the annular housing (2) in order to produce selective connection or disconnection of the attachment surface (12) relative to the annular housing (2), **characterised in that** the attachment surface (12) comprises a pin (3), and **in that** the annular housing (2) comprises at its periphery one or more apertures (4) which are intended to selectively accommodate the one or more ends of the pin forming the attachment surface (12), the pin (3) passing through the body of the housing (2) in order to extend into the central opening thereof.

10. Identification device according to claim 9, **characterised in that** the pin (3) comprises one or more branches at a distance from one another, each forming an attachment surface (12).

11. Method for installing an identification device according to claims 9 and 10 on a container (5), in particular for pressurised fluid, comprising a fill and/or discharge aperture (7) and a cock (6) which is fastened in the aperture of the container, **characterised in that** it includes a first step of installing a cock in the aperture (7) of the container, a second step of placing the identification device around the aperture (7) of the container by fitting and guiding the annular housing (2) along the cock (6) which is already installed on the container (5), a third step of fastening the attachment surface (12) to the annular housing (2) in order to position the attachment surface (12) between the body of the container (5) and the body of the cock (6) and lock it in position.

12. Method for installing an identification device on a container (5), according to claim 5, **characterised in that** it includes a first step of installing the cock in the aperture (7) of the container, a second step of placing the identification device around the aperture (7) of the container by fitting and guiding the annular housing (2) along the cock (6) which is already installed by elastic deformation of the flexible portions or tabs of the attachment surface (12), in order to position the attachment surface (12) between the body of the container (5) and the body of the cock (6) and lock it in position.
